# EUROPEAN PATENT SPECIFICATION

(11) **EP 3 155 244 B1**
(45) Date of publication and mention of the grant of the patent: **27.02.2019**
(21) Application number: 15806353.7
(22) Date of filing: 27.05.2015
(51) Int. Cl.: F01N 3/20, B60K 15/03

(54) **SYSTEM AND METHOD FOR THE TRANSFER OF FLUID IN A VEHICLE**
SYSTEM UND VERFAHREN ZUR ÜBERTRAGUNG EINER FLÜSSIGKEIT IN EINEM FAHRZEUG
SYSTÈME ET PROCÉDÉ DE TRANSFERT DE FLUIDE DANS UN VÉHICULE

(30) Priority: 12.06.2014 SE 1450717
(43) Date of publication of application: 19.04.2017
(73) Proprietor: Scania CV AB, 151 87 Södertälje (SE)
(72) Inventor: SOMMANSSON, Joakim, S-147 71 Grödinge (SE); OLOFSSON, Markus, S-117 67 Gröndal (SE); SALEEB, Markos, S-907 36 Umeå (SE)
(74) Representative: Scania CV AB
(86) International application number: PCT/SE2015/050607
(87) International publication number: WO 2015/190978

(56) References cited:
- WO-A1-2004/047963
- WO-A1-2004/047963
- US-A- 5 884 475
- US-A- 5 884 475
- US-A1- 2010 319 326
- US-A1- 2010 319 326
- US-A1- 2012 031 073
- US-A1- 2012 031 073
- US-A1- 2012 279 576
- US-A1- 2014 053 537
- US-A1- 2014 053 537

## Description

### Technical area

The present invention relates to a system and a method for the transfer of fluid in a vehicle. The invention relates also to a computer program and a computer program product.

### Background to the invention

Space is often a problem during the assembly of tanks on vehicles. In order to reduce the number of occasions of refuelling, tanks that are as large as possible are desired. This is particularly common on larger and more energy-demanding vehicles such as, for example, trucks, buses, construction machines, etc. Large tanks, however, may be difficult to place in the vehicle, and one solution to this problem is to distribute the tank volume among several tanks.

When mounting tanks for reducer agent, which is used in modern diesel-powered vehicles to reduce the emission of harmful nitrogen oxides, the reducer agent is stored in double tanks in many commercial vehicles. One of these tanks is the active tank, i.e. it is arranged to provide the agent to the exhaust gas system of the diesel engine. Pipelines connect these two communicating tanks such that reducer agent can be transferred to the active tank when it becomes empty.

US2012/027957A1 reveals a system to supply reducer agent in the exhaust gas system of a vehicle. The system comprises a pump arranged in connection with an active tank, a storage tank and two pipelines that connect the tanks. The pump creates negative pressure in the active tank, whereupon the agent is drawn by suction into the active tank.

When the transfer of fluid between the tanks is complete, fluid may remain in the pipelines between the tanks. The remaining fluid may eventually crystallise and block the pipeline. Blockage of the pipeline may be caused also by the remaining fluid freezing in low temperatures. Blockage of pipelines that arises in this manner is normally avoided through keeping the pipelines warm, preferably with the aid of electrical coils. This solution, however, suffers from several disadvantages, such as an increased technical complexity of the system and increasing energy consumption.

It is, furthermore, not uncommon that the fluid, in particular when it is present in the liquid phase, has corrosive properties and can thus corrode the pipeline in which it is located during long-term contact. It is known also that components of electrical heating systems, such as electrical coils, often experience short-circuits caused by fluids with corrosive properties, such as reducer agent.

US20103/19326A1 reveals a dosage unit for the injection of reducer agent into the exhaust gas system. The arrangement comprises a pump and three valves that are used to fill the active tank with reducer agent from the storage tank, and to partially expel by pressure the reducer agent from the connective pipelines between the tanks.

The arrangement that is described in US20103/19326A1, however, can most often not succeed in expelling the reducer agent from the pipeline that extends between the coupling/closure valve and the storage tank. Furthermore, the arrangement is complex, since several valves are used. It thus breaks easily, possibly leading to significant periods out of commission. Furthermore, control of such an arrangement is complicated.

The purpose of the present invention, therefore, is to provide a technically simple solution with as few moving parts as possible, and that removes, in particular, reducer agent from the connective pipelines in a reliable manner.

### Summary of the invention

According to a first aspect, the purpose described above is at least partially achieved through a method for the transfer of fluid in a vehicle according to claim 1.

The system thus comprises a main tank, a secondary tank, a pump, a first valve arrangement, a first fluid pathway that connects a source of pressurised air with the valve arrangement, a second fluid pathway that connects the valve arrangement and the secondary tank, a third fluid pathway that connects the valve arrangement and the main tank, whereby the pump is arranged at least partially in the first and the third fluid pathway, whereby the system in response to a control signal is arranged to be placed into a first condition, in which the first valve arrangement is in a first condition in which air under pressure flows through the first fluid pathway from the source of pressurised air to the pump, whereby the pump transfers the fluid from the secondary tank to the main tank through the valve arrangement and through the second and third fluid pathways, or a second condition, in which the first valve arrangement is in a second condition in which air under pressure flows through the first and second fluid pathways from the source of pressurised air through the valve arrangement to the secondary tank, whereby the pump transfers a flow of air in the third fluid pathway from the valve arrangement to the main tank.

The system according to the invention comprises a valve arrangement that alternates between two conditions, fluid transfer between the tanks and blowing the fluid pathways clear. A robust and easily controlled design solution is in this way obtained. Furthermore, the extent of each fluid pathway and the positioning of the valves, that when in the blowing clear condition create a connection between the first and the second fluid pathways, lead to air under pressure in the said condition flowing through the second fluid pathway and emptying it of fluid. The remaining fluid from the second fluid pathway therefore ends up in the secondary tank. The negative pressure that the pump at the same time creates in the third fluid pathway leads to the remaining fluid from the third fluid pathway and from the pump itself ending up in the main tank. Both the second and the third fluid pathways can, therefore, be emptied of remaining fluid.

According to a second aspect, the purpose described above is at least partially achieved through a method for the transfer of fluid in system intended for a vehicle, whereby the system comprises a main tank, a secondary tank, a pump, a first valve arrangement, a first fluid pathway that connects a source of pressurised air with the valve arrangement, a second fluid pathway that connects the valve arrangement and the secondary tank, a third fluid pathway that connects the valve arrangement and the main tank, whereby the pump is arranged at least partially in the first and the third fluid pathway, whereby the method comprises to receive a control signal and to place the system, as a response to the control signal, in a first condition, in which the first valve arrangement is in a first condition in which air under pressure flows through the first fluid pathway from the source of pressurised air to the pump, and in which the fluid is transferred from the secondary tank to the main tank through the valve arrangement and through the second and third fluid pathways, or in a second condition, in which the first valve arrangement is in a second condition in which air under pressure flows through the first and second fluid pathways from the source of pressurised air through the valve arrangement to the secondary tank, and in which a flow of air is transferred in the third fluid pathway from the valve arrangement to the main tank.

According to a third aspect, the purpose is at least partially achieved through a computer program, P, where the said computer P comprises program code to cause a computer to carry out the steps according to the method.

According to a fourth aspect, the purpose is at least partially achieved through a computer program product comprising a program code stored on a non-transient medium that can be read by a computer in order to carry out the method steps, when the said programme is run on a computer.

Various preferred embodiments are described in the non-independent claims and in the detailed description.

### Brief description of the attached drawings

The invention will be described below with reference to the attached drawings, of which:
Figure 1 is a schematic view from above of a vehicle with double tanks intended for reducer agent according to one embodiment of the present invention.
Figure 2a shows a block diagram that represents the system for the transfer of fluid between two fluid tanks where the system is in a first condition.
Figure 2b shows a block diagram that represents the system in a second condition.
Figure 3 is a flow diagram containing the method steps according to one embodiment of the present invention.

### Detailed description of preferred embodiments of the invention

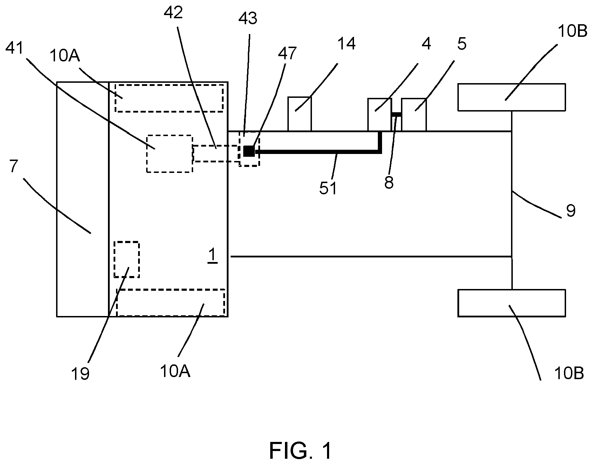

Figure 1 is a schematic view from above of a vehicle 1 with double tanks 4, 5 intended for reducer agent according to one embodiment of the present invention.

The vehicle 1 is displayed here in the form of a truck or drawing vehicle with a chassis 9 and two pairs of wheels 10A and 10B. Tanks 4, 5 with reducer agent are mounted on the chassis 9. The truck is displayed here solely as an example, and the vehicle 1 may instead be, for example, an SUV, a bus, a working vehicle or similar. A driver's cabin 7 is located at the front of the truck. A combustion engine 41 is located under the driver's cabin 7. Exhaust gases that are generated during combustion are led into an exhaust gas system 42. Trucks and other commercial vehicles typically have a pneumatic brake system that comprises a tank 14 that contains air under pressure. As is shown in Figure 1, also the air tank 14 is normally mounted on the chassis 9.

A dosage unit 47 for reducer agent is typically arranged in the flow of exhaust gases downstream of the combustion engine 41. To be more specific, the dosage unit 47 for reducer agent is often located inside a sound absorber 43 that is normally arranged in connection with the exhaust gas system 42. In this context, the product name AdBlue® is usually used in Europe when referring to reducer agent. The reducer agent is here used solely for the purpose of giving an example, and the tanks may contain instead other relevant fluids, such as diesel fuel.

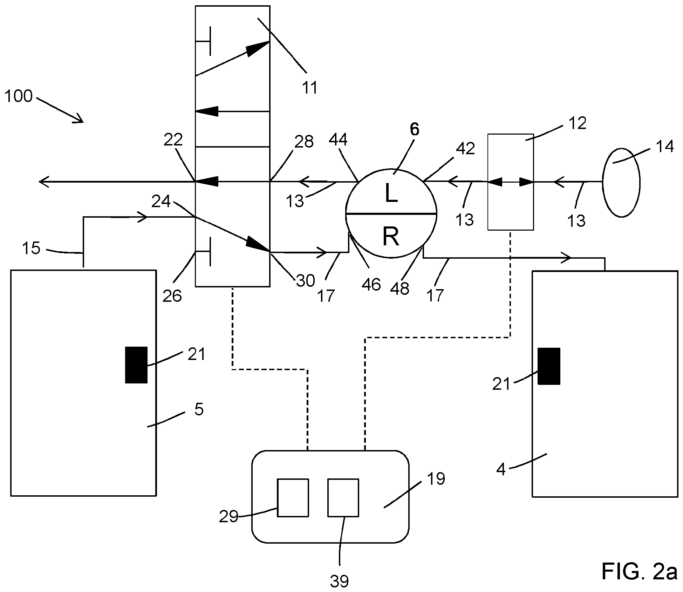

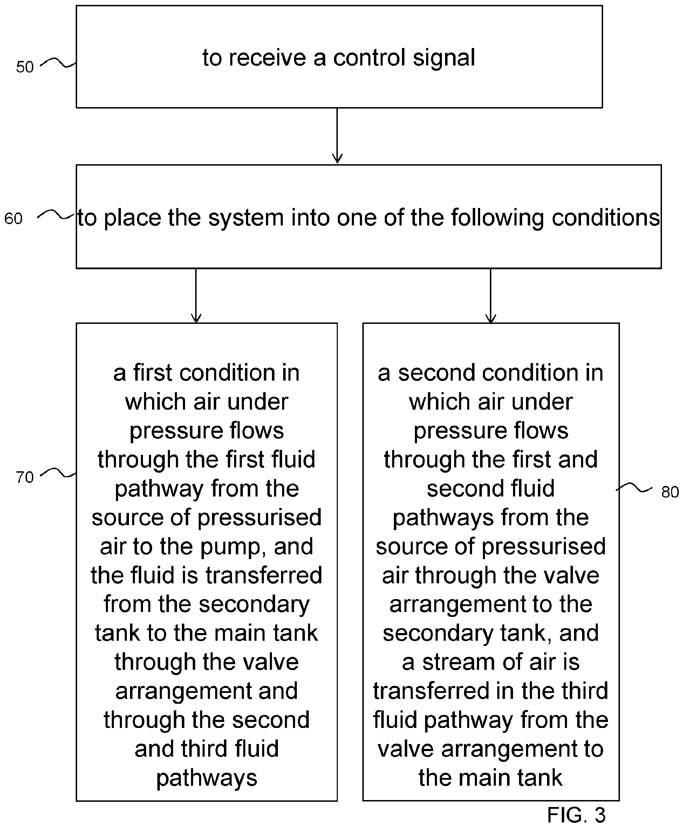

In order to use the space in the truck as efficiently as possible, it is possible to have a design comprising two tanks that are placed at a distance from each other. A main, or active, tank 4 provides the dosage unit 47 for reducer agent with reducer agent through a pipeline 51. The dosage unit 47 for reducer agent injects the reducer agent that has been supplied into the flow of exhaust gases in order in this way to contribute to reduce the emission of harmful nitrogen oxides. The reducer agent in a secondary, or storage, tank 5 is a reserve that is transferred through at least one pipeline 8 to the main tank when the latter is nearly empty. The transfer is normally controlled by a control unit 19 that is shown schematically in Figure 1. The main tank and/or the secondary tank is typically equipped with at least one sensor (not shown in Figure 1) that measures the amount of fluid in the tank. The sensor may be, for example, a level sensor, i.e. an arrangement that measures the level of the fluid in the tank, or an arrangement that determines the weight or the volume of the fluid. The capacity of each tank is between 25 and 100 litres of reducer agent, preferably approximately 80 litres. In order to transfer fluid between the tanks, such a system 100 may be used as the system that will now be described with reference to Figures 2a-2b and Figure 3.

Figure 3 shows a block diagram that represents the system 100 for the transfer of fluid, such as reducer agent, between two fluid tanks where the system is in a first condition. The system comprises a main tank 4 and a secondary tank 5, together with a pump 6 and a first valve arrangement 11. Fluid pathways in the form of pipelines extend such that a section of pipe of a first pipeline 13 connects the source 14 of pressurised air with the valve arrangement 11, a second fluid pipeline 15 connects the valve arrangement 11 and the secondary tank 5, and a section of pipe of a third pipeline connects the valve arrangement 11 and the main tank 4. In particular the pipelines, but also other components of the system, may be manufactured from material that resists the corrosive properties of the reducer agent and/or internally coated with an appropriate corrosion-preventative substance.

The first valve arrangement 11 may be a five-port valve, such as a 5/2 valve as is shown in Figure 2a. The valve arrangement may be activated in various ways, such as, for example, with the aid of a solenoid and/or a spring arrangement (not shown in the drawings). Alternatively, a 5/3 valve may be used. The designator "5/2" denotes that the valve has five ports, i.e. openings in the valve casing, and two conditions. With reference to the five-port valve that is shown in Figure 2a, three of the ports: the first 22, second 24 and third 26, are arranged on the side of the valve that faces towards the secondary tank. A fourth 28 and a fifth 30 port are arranged on the opposite side. The ports serve as inlets or outlets for air and/or reducer agent, depending on the condition of the valve.

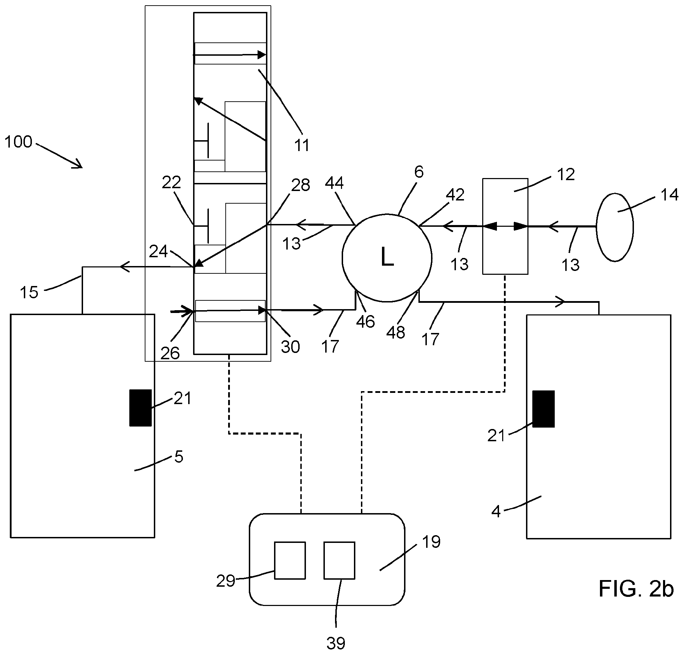

The system in one embodiment may comprise a second valve arrangement 12 that is arranged in the first pipeline 13 in order to regulate the supply of pressurised air from the source 14 of pressurised air to the first pipeline 13, the pump 6 and the rest of system. The valve 12 has an air inlet 33 on the side of the source of pressurised air in which a segment of the first pipeline 13 ends, and an air outlet 35 on the opposite side. The second valve arrangement 12, which may be a solenoid-activated ball valve, is arranged to alternate between a closed condition in which pressurised air is not permitted to flow in the first pipeline 13 and, as is shown in Figure 2a, an open condition in which pressurised air flows through the first pipeline 13. When the second valve arrangement 12 is in its closed condition, i.e. when no air flows through the first pipeline 13, the system is passive, which means that no fluid is transferred between the tanks 4, 5. When the system is passive, reducer agent can be supplied to the dosage unit for reducer agent (not shown in Figure 2a), whose location and function have been described in association with Figure 1. If the second valve arrangement 12 is in its open condition, the pressurised air drives the pump 6 and the system is in a first condition that is described in association with Figure 2a or in a second condition that will be described in association with Figure 2b. In other words, the second valve arrangement 12 allows the supply of pressurised air to the first pipeline 13 when the system is in either the first or the second condition.

With continued reference to Figure 2a, the system is shown in a first condition, which means that the first valve arrangement 11 is in a first condition and the second valve arrangement 12 is in its open condition. The main tank 4 is normally nearly empty in this condition, and reducer agent is to be transferred to it from the secondary tank 5. A segment of the first pipeline 13 extends from the second valve arrangement 12 to a pump inlet 42 that belongs to the first pipeline. A second segment of the first pipeline 13 extends between a pump outlet 44 that belongs to the first pipeline and the fourth port 28 of the five-port valve. The first 22 port and the fourth port 28 of the valve are in fluid communication, such that the pressurised air that flows in the first pipeline 13 and drives the air pump 6 can leave the system through the first port 22. Also the second port 24 and the fifth port 30 are in fluid communication in this condition. This means that reducer agent is pumped from the secondary tank 5, flows through the second pipeline 15 and enters the first valve arrangement 11 through the second port 24 on the valve. As previously mentioned, the second port 24 and the fifth port 30 are in fluid communication. A segment of the third pipeline 17 extends from the fifth port 30 of the five-port valve to a pump inlet 46 that belongs to the third pipeline 17. A second segment of the third pipeline 17 extends between a pump outlet 48 that belongs to the third pipeline 17 and the main tank 4. The third valve port 26 in this condition is closed. In summary, the pump 6 can transfer the reducer agent from the secondary tank 5 to the main tank 4 through the first valve arrangement 11 and through the second pipeline 15 and the third pipeline 17.

As is made clear by Figure 2a, the pump 6 is arranged in the first pipeline 13 and the third pipeline 17. Different types of pump may be suitable, such as an air pump or another type of pump that can change the air pressure in the system. Such an air pump 6 typically has a central shaft that can be rotated (not shown in the drawings) and a pair of paddle wheels (not shown in the drawings), upper and lower, fixed one at each end of this shaft. As has been mentioned above, the pump 6 comprises furthermore an inlet 42 and an outlet 44, which belong to the first pipeline 13 and a further inlet 46 and a further outlet 48, which belong to the third pipeline 17. The pump 6 contains, in a first condition, an amount of reducer agent R with air L above this. Depending on the amount of reducer agent R in the pump 6, the lower paddle wheel may be in contact with reducer agent. The opposite, upper paddle wheel is arranged such that the incoming pressurised air can set it in motion. Since the paddle wheel is rigidly engaged with the shaft, also the shaft and the lower paddle wheel are thus set in motion. This leads to the reducer agent being displaced through the third pipeline 17 towards the main tank 4.

The pressurised air of the system may be delivered from an air tank 14 that is mounted on the vehicle. In one embodiment, the source of pressurised air is the air tank that is a component in the pneumatic brake system of the vehicle and that has been described in association with Figure 1. Due to the robust design of the solution, the magnitude of the pressure is not of primary significance as long as the pressure can drive the pump. SUVs and other vehicles that lack an air tank may be equipped with an air compressor that provides pressurised air. Alternatively, the pressurised air may consist of or comprise exhaust gases that are produced in the exhaust gas system of the vehicle.

The system 100 in Figure 2b is in a second condition, and also the first valve arrangement 11 is in a second condition. The second valve arrangement 12 remains in an open condition. In this condition, the secondary tank 5 is empty and the main tank 4 is full - reducer agent has been transferred to it from the secondary tank 5. The extents of the pipelines 13, 15, 17 are unchanged from those shown in Figure 2a. The second port 24 and the fourth port 28 are in fluid communication such that the pressurised air that drives the pump 6 can flow through the first pipeline 13 and the second pipeline 15 from the source 14 of pressurised air through the above-mentioned valve ports and blow clean the second pipeline 15 such that the remaining reducer agent comes to be in the secondary tank 5. The third port 26 and the fifth port 30 are also in fluid communication such that negative pressure that the pump 6 creates can give rise to a flow of air in the third pipeline 17 from the first valve arrangement 11 to the main tank 4, which makes it possible for the pump 6 and the third pipeline 17 to be blown clean, such that the remaining reducer agent from there ends up in the main tank 4. The air in the third pipeline 17 may be filtered ambient air that enters the system through the third port 26 of the five-port valve. The first valve port 22 is closed in this condition.

The system 100 changes its condition in response to a control signal. To be more specific, an electronic control unit 19 may be arranged to generate a first control signal to place the system into the first condition and a second control signal to place the system into the second condition. In one embodiment, the amount of fluid in at least one of the tanks 4, 5 is measured, after which the control unit generates a first or second control signal based on the amount of fluid in the main tank 4 and/or the secondary tank 5. In another, closely related embodiment, the amount of fluid, reducer agent or fuel that has been measured is compared with a predetermined value for the amount of fluid, and generates a first or second control signal depending on the result of the comparison. For example, the amount of fluid in the main tank 4 may be compared with a lowest limiting value for the amount of fluid in the main tank 4 and generate a first control signal if the amount of fluid in the main tank 4 lies below the lowest limiting value. The first control signal activates the first valve arrangement 11 that takes up a first condition, after which the fluid is transferred from the secondary tank 5 to the main tank 4 as described above in association with Figure 2a. In a similar manner, the amount of fluid in the secondary tank 5 may be compared with a lowest limiting value for the amount of fluid in the secondary tank 5 and generate a second control signal if the amount of fluid in the secondary tank 5 lies below the lowest limiting value. The second control signal activates the first valve arrangement 11, which takes up its second condition, after which the pipelines 13, 15, 17 are blown clean as described above in association with Figure 2b.

The control unit 19 may be an integral part of the system. The control unit 19 comprises further a processor unit 29 and a memory unit 39 that is connected to the processor unit. A computer program P is stored on the memory unit 39, which computer program can cause the control unit 19 to carry out the steps according to the method that is described here. According to one embodiment, the memory unit 39 is a part of the processor unit 29. The processor unit 29 may be constituted by one or several CPUs (central processing units). The memory unit 39 may comprise a non-transient memory, such as a flash memory or RAM (random access memory). The memory unit 39 comprises instructions to cause the processor unit 29 to execute the method steps that are described here.

As has previously been mentioned in association with Figure 1, each tank 4, 5 has at least one sensor 21 that measures the amount of fluid in the tank. Each one of these sensors 21 is, furthermore, arranged to generate a sensor signal that specifies the amount of fluid, whereby the control unit 19 is arranged to receive the sensor signal and to generate a first or second control signal based on the amount of fluid in the main tank 4 and/or the secondary tank 5. In the event of the main tank 4 being empty, or the amount of fluid in the main tank 4 lying below the lowest limiting value, a sensor signal is generated from the sensor 21 that is associated with it, which sensor signal gives rise to a first control signal that is generated in the control unit 19. The valve arrangement then takes up a first condition and fluid is transferred from the secondary tank 5 to the main tank 4 as described above in association with Figure 2a.

In the event of the secondary tank 5 being empty, or the amount of fluid in the secondary tank 5 lying below a lowest limiting value for the amount of fluid in the secondary tank, a sensor signal is generated from the sensor 21 that is associated with it, which sensor signal gives rise to a second control signal that is generated in the control unit 19. The valve arrangement 11 then takes up a second condition and the pipelines are blown clean as described above in association with Figure 2b. According to one embodiment, the control unit 19 is arranged to place the system 100 into the second condition for a predetermined period of time, such as 10, 20, 30 or 40 seconds.

The sensors 21, the control unit 19 and the unit or units that activate the first 11 and the second 12 valve arrangement may communicate with each other by, for example, a bus, such as a CAN-bus (controller area network), which uses a message-based protocol. Examples of other communication protocols that can be used are TTP (time-triggered protocol), Flexray, etc. Signals and data as described above can in this way be exchanged between various units in the vehicle 1. Signals and data can instead be transferred in a wireless manner, for example, between the various units.

Figure 3 is a flow diagram containing the method steps according to the present invention. The flow diagram shows a method for the transfer of fluid in the system 100 that has previously been described with reference to Figures 2a and 2b. The method comprises receiving 50 a control signal and, in response to the control signal, placing 60 the system into a first condition 70 or a second condition 80.

In the first condition 70, the first valve arrangement 11 is in a first condition and the second valve arrangement 12 is in its open condition. In this condition 70, the main tank 4 is normally empty, and the reducer agent is to be transferred to it from the secondary tank 5. Air under pressure then flows through the first fluid pathway, i.e. the first pipeline 13 that is constituted by several sections of pipe according to Figure 2a. The pressurised air flows from the source 14 of pressurised air to the air-driven pump 6 as has been described in detail in association with Figure 2a. The action of the pump makes it possible for fluid to be transferred from the secondary tank 5 to the main tank 4 through the first valve arrangement 11 and through the second pipeline 15 and the third pipeline 17, which are constituted by several sections of pipe according to Figure 2a. The pressurised air leaves system through the first valve arrangement and is blown out into the surroundings.

In a second condition 80, the first valve arrangement 11 is in a second condition in which air under pressure flows through the first and second fluid pathways from the source 14 of pressurised air through the valve arrangement 11 to the secondary tank 5, and a stream of air is transferred in the third fluid pathway from the valve arrangement 11 to the main tank 4. As has been mentioned above, the fluid pathways in the form of pipelines 13, 15, 17 and their extents are the same, independently of the condition. In this condition, the secondary tank 5 is empty and the main tank 4 is full since the reducer agent has been transferred to it from the secondary tank 5. The pressurised air from the source 14 of pressurised air that drives the pump 6 can flow through the first 13 pipeline in order to blow clean the second pipeline 15 through the valve arrangement 11, such that the reducer agent that remains in the pipeline comes to be in the secondary tank 5. The negative pressure that is created in the system 100 by the action of the air-driven pump may give rise to a flow of air in the third pipeline 17. This flow of air flows from the first valve arrangement 11 to the main tank 4, which makes it possible for the pump 6 and the third pipeline 17 to be blown clean, such that the remaining reducer agent from there ends up in the main tank 4. The air in the third pipeline 17 is, in one embodiment, ambient air that enters the system through the valve arrangement.

The present invention is not limited to the embodiments described above. Various alternatives, modifications and equivalents can be used. For this reason, the embodiments named above do not limit the scope of the invention, which is defined by the attached patent claims.

## Claims

1. A system (100) for the transfer of fluid in a vehicle (1), whereby the system comprises:
- a main tank (4),
- a secondary tank (5),
- a pump (6),
- a first valve arrangement (11),
- a first fluid pathway (13) that connects a source of pressurised air with the valve arrangement (11),
- a second fluid pathway (15) that connects the valve arrangement (11) and the secondary tank (5),
- a third fluid pathway (17) that connects the valve arrangement (11) and the main tank (4), whereby the pump (6) is arranged at least partially in the first (13) and the third (17) fluid pathways;
whereby the system (100), as a response to a control signal, is arranged to be placed into
a first condition, in which the first valve arrangement (11) is in a first condition in which air under pressure flows through the first fluid pathway (13) from the source of pressurised air to the pump (6), whereby the pump transfers the fluid from the secondary tank (5) to the main tank (4) through the valve arrangement (11) and through the second (15) and third (17) fluid pathways, or
a second condition, in which the first valve arrangement (11) is in a second condition in which air under pressure flows through the first (13) and second (15) fluid pathways from the source of pressurised air through the valve arrangement (11) to the secondary tank (5), whereby the pump (6) transfers a flow of air in the third fluid pathway (17) from the valve arrangement (11) to the main tank (4).

2. The system (100) according to claim 1, that comprises a second valve arrangement that is arranged to regulate the supply of pressurised air, and that is arranged to be placed into a closed condition in which pressurised air is not permitted to flow in the first fluid pathway (13) and an open condition in which pressurised air flows through the first fluid pipeline (13).

3. The system (100) according to claim 2, whereby the second valve arrangement is arranged to be placed into the open condition when the system is in the first or second condition.

4. The system (100) according to any one of the preceding claims, whereby the first valve arrangement is a five-port valve, preferably a 5/2 or a 5/3 valve.

5. The system (100) according to any one of the preceding claims, whereby the fluid that is transferred is a reducer agent.

6. The system (100) according to any one of the preceding claims, that comprises a control unit (19) that is arranged to generate a first control signal to place the system into the first condition and a second control signal to place the system into the second condition.

7. The system (100) according to claim 6, whereby the main tank (4) and/or the secondary tank (5) is equipped with at least one sensor (21) that measures the amount of fluid in the tank (4, 5), and that is arranged to generate a sensor signal that specifies the amount of fluid, whereby the control unit (19) is arranged to receive the sensor signal and to generate a first or second control signal based on the amount of fluid in the main tank 4 and/or the secondary tank (5).

8. The system (100) according to claim 7, whereby the control unit (19) is arranged to compare the amount of fluid with a predetermined value for the amount of fluid, and to generate a first or second control signal depending on the result of the comparison.

9. The system (100) according to claim 8, whereby the control unit (19) is arranged to compare the amount of fluid in the main tank (4) with a lowest limiting value for the amount of fluid in the main tank (4), and to generate a first control signal if the amount of fluid in the main tank (4) lies below the lowest limiting value.

10. The system (100) according to claim 8 or 9, whereby the control unit (19) is arranged to compare the amount of fluid in the secondary tank (5) with a lowest limiting value for the amount of fluid in the secondary tank (5), and to generate a second control signal if the amount of fluid in the main tank (4) lies below the lowest limiting value.

11. The system (100) according to any one of claims 6-10, whereby the control unit (19) is arranged to place the system into the second condition for a predetermined period of time.

12. A vehicle (1) that comprises the system (100) according to any one of the preceding claims.

13. A method for the transfer of fluid in a system intended for a vehicle (1), whereby the system (100) comprises:
- a main tank (4),
- a secondary tank (5),
- a pump (6),
- a first valve arrangement (11),
- a first fluid pathway (13) that connects a source of pressurised air with the valve arrangement,
- a second fluid pathway (15) that connects the valve arrangement and the secondary tank,
- a third fluid pathway (17) that connects the valve arrangement and the main tank, whereby the pump is arranged at least partially in the first and the third fluid pathways;
whereby the method comprises
- to receive (50) a control signal
- as a response to the control signal, to place the system (60)
into a first condition (70), in which the first valve arrangement is in a first condition in which air under pressure flows through the first fluid pathway from the source of pressurised air to the pump, and in which the fluid is transferred from the secondary tank to the main tank through the valve arrangement and through the second and third fluid pathways,
or
into a second condition (80), in which the first valve arrangement is in a second condition in which air under pressure flows through the first and second fluid pathways from the source of pressurised air through the valve arrangement to the secondary tank, and a stream of air is transferred in the third fluid pathway from the valve arrangement to the main tank.

14. The method according to claim 13, that comprises to regulate the supply of pressurised air to the first fluid pathway.

15. The method according to claim 14, that comprises to allow the supply of pressurised air to the first fluid pathway when the system is in the first or second condition.

16. The method according to any one of claims 13-15, that comprises to generate a first control signal to place the system into the first condition or a second control signal to place the system into the second condition.

17. The method according to claim 16, that comprises:
- to measure the amount of fluid in the tank,
- to generate a first or second control signal based on the amount of fluid in the main tank and/or the secondary tank.

18. The method according to claim 17, that comprises:
- to compare the amount of fluid with a predetermined value for the amount of fluid, and
- to generate a first or second control signal depending on the result of the comparison.

19. The method according to claim 18, that comprises:
- to compare the amount of fluid in the main tank with a lowest limiting value for the amount of fluid in the main tank, and
- to generate a first control signal if the amount of fluid in the main tank lies below the lowest limiting value.

20. The method according to claim 17 or 18, that comprises:
- to compare the amount of fluid in the secondary tank with a lowest limiting value for the amount of fluid in the secondary tank, and
- to generate a second control signal if the amount of fluid in the secondary tank lies below the lowest limiting value.

21. The method according to any one of claims 13-20, that comprises to place the system into the second condition for a predetermined period of time.

22. A computer program (P), where the said computer program (P) comprises program code to cause an electronic control unit (19), or another computer connected to the electronic control unit, to carry out the steps according to any one of claims 13-21.

23. A computer product comprising a program code stored on a non-transient medium that can be read by a computer in order to carry out the method steps according to any one of claims 13-21, when the said program code is run on an electronic control unit (19) or another computer connected to the electronic control unit.

## Patentansprüche

1. System (100) zum Übertragen von Fluid in einem Fahrzeug (1), wobei das System umfasst:
- einen Haupttank (4),
- einen Nebentank (5),
- eine Pumpe (6),
- eine erste Ventilanordnung (11),
- einen ersten Fluiddurchgang (13), der eine Druckluftquelle mit der Ventilanordnung (11) verbindet,
- einen zweiten Fluiddurchgang (15), der die Ventilanordnung (11) und den Nebentank (5) verbindet,
- einen dritten Fluiddurchgang (17), der die Ventilanordnung (11) und den Haupttank (4) verbindet, wobei die Pumpe (6) mindestens teilweise in dem ersten (13) und dem dritten (17) Fluiddurchgang angeordnet ist;
wobei das System (100) als Reaktion auf ein Steuersignal angeordnet ist,
um in einen ersten Zustand versetzt zu werden, in dem sich die erste Ventilanordnung (11) in einem ersten Zustand befindet, in dem unter Druck stehende Luft durch den ersten Fluiddurchgang (13) von der Druckluftquelle zu der Pumpe (6) strömt, wobei die Pumpe das Fluid von dem Nebentank (5) über die Ventilanordnung (11) und durch den zweiten (15) und dritten (17) Fluiddurchgang zu dem Haupttank (4) überträgt, oder
um in einen zweiten Zustand versetzt zu werden, in dem sich die erste Ventilanordnung (11) in einem zweiten Zustand befindet, in dem unter Druck stehende Luft durch den ersten (13) und den zweiten (15) Fluiddurchgang von der Druckluftquelle durch die Ventilanordnung (11) zu dem Nebentank (5) strömt, wobei die Pumpe (6) eine Luftströmung in dem dritten Fluiddurchgang (17) von der Ventilanordnung (11) auf den Haupttank (4) überträgt.

2. System (100) nach Anspruch 1, das eine zweite Ventilanordnung umfasst, die angeordnet ist, um die Zufuhr von Druckluft zu regulieren, und die angeordnet ist, um in einen geschlossenen Zustand, in dem keine Druckluft in den ersten Fluiddurchgang (13) strömen kann, und einen offenen Zustand, in dem Druckluft durch die erste Fluidleitung (13) strömt, versetzt zu werden.

3. System (100) nach Anspruch 2, wobei die zweite Ventilanordnung angeordnet ist, um in den offenen Zustand versetzt zu werden, wenn sich das System in dem ersten oder zweiten Zustand befindet.

4. System (100) nach einem der vorhergehenden Ansprüche, wobei die erste Ventilanordnung ein Fünfwegeventil, bevorzugt ein 5/2- oder ein 5/3-Ventil ist.

5. System (100) nach einem der vorhergehenden Ansprüche, wobei das Fluid, das übertragen wird, ein Reduktionsmittel ist.

6. System (100) nach einem der vorhergehenden Ansprüche, das eine Steuereinheit (19) umfasst, die angeordnet ist, um ein erstes Steuersignal, um das System in den ersten Zustand zu versetzen, und ein zweites Signal, um das System in den zweiten Zustand zu versetzen, zu generieren.

7. System (100) nach Anspruch 6, wobei der Haupttank (4) und/oder der Nebentank (5) mit mindestens einem Sensor (21) ausgestattet ist bzw. sind, der die Fluidmenge in dem Tank (4, 5) misst, und der angeordnet ist, um ein Sensorsignal zu generieren, das die Fluidmenge vorgibt, wobei die Steuereinheit (19) angeordnet ist, um das Sensorsignal zu empfangen und das erste oder zweite Steuersignal basierend auf der Fluidmenge in dem Haupttank (4) und/oder dem Nebentank (5) zu generieren.

8. System (100) nach Anspruch 7, wobei die Steuereinheit (19) angeordnet ist, um die Fluidmenge mit einem vorbestimmten Wert für die Fluidmenge zu vergleichen und um in Abhängigkeit von dem Ergebnis des Vergleichs ein erstes oder zweites Steuersignal zu generieren.

9. System (100) nach Anspruch 8, wobei die Steuereinheit (19) angeordnet ist, um die Fluidmenge in dem Haupttank (4) mit einem niedrigsten Grenzwert für die Fluidmenge in dem Haupttank (4) zu vergleichen und um ein erstes Steuersignal zu generieren, falls die Fluidmenge in dem Haupttank (4) unter dem niedrigsten Grenzwert liegt.

10. System (100) nach Anspruch 8 oder 9, wobei die Steuereinheit (19) angeordnet ist, um die Fluidmenge in dem Nebentank (5) mit einem niedrigsten Grenzwert für die Fluidmenge in dem Nebentank (5) zu vergleichen, und um ein zweites Steuersignal zu generieren, falls die Fluidmenge in dem Haupttank unter dem niedrigsten Grenzwert liegt.

11. System (100) nach einem der Ansprüche 6 bis 10, wobei die Steuereinheit (19) angeordnet ist, um das System während eines vorbestimmten Zeitraums in den zweiten Zustand zu versetzen.

12. Fahrzeug (1), welches das System (100) nach einem der vorhergehenden Ansprüche umfasst.

13. Verfahren zum Übertragen von Fluid in einem System, das für ein Fahrzeug (1) gedacht ist, wobei das System (100) umfasst:
- einen Haupttank (4),
- einen Nebentank (5),
- eine Pumpe (6),
- eine erste Ventilanordnung (11),
- einen ersten Fluiddurchgang (13), der eine Druckluftquelle mit der Ventilanordnung verbindet,
- einen zweiten Fluiddurchgang (15), der die Ventilanordnung und den Nebentank verbindet,
- einen dritten Fluiddurchgang (17), der die Ventilanordnung und den Haupttank verbindet, wobei die Pumpe mindestens teilweise in dem ersten und dem dritten Fluiddurchgang angeordnet ist;
wobei das Verfahren umfasst
- das Empfangen (50) eines Steuersignals,
- als Reaktion auf das Steuersignal, das Versetzen des Systems (60) in einen ersten Zustand (70), in dem sich die erste Ventilanordnung in einem ersten Zustand befindet, in dem Druckluft durch den ersten Fluiddurchgang von der Druckluftquelle zu der Pumpe strömt, und in dem das Fluid von dem Nebentank durch die Ventilanordnung und durch die zweiten und dritten Fluiddurchgänge auf den Haupttank übertragen wird, oder
in einen zweiten Zustand (80), in dem sich die erste Ventilanordnung in einem zweiten Zustand befindet, in dem Druckluft durch die ersten und zweiten Fluiddurchgänge von der Druckluftquelle durch die Ventilanordnung zu dem Nebentank strömt, und ein Luftstrom in dem dritten Fluiddurchgang von der Ventilanordnung auf den Haupttank übertragen wird.

14. Verfahren nach Anspruch 13, umfassend das Regulieren der Zufuhr von Druckluft zu dem ersten Fluiddurchgang.

15. Verfahren nach Anspruch 14, umfassend das Erlauben der Zufuhr von Druckluft zu dem ersten Fluiddurchgang, wenn sich das System in dem ersten oder zweiten Zustand befindet.

16. Verfahren nach einem der Ansprüche 13 bis 15, umfassend das Generieren eines ersten Steuersignals, um das System in den ersten Zustand zu versetzen, oder eines zweiten Steuersignals, um das System in den zweiten Zustand zu versetzen.

17. Verfahren nach Anspruch 16, umfassend:
- das Messen der Fluidmenge in dem Tank,
- das Generieren eines ersten oder zweiten Steuersignals basierend auf der Fluidmenge in dem Haupttank und/oder dem Nebentank.

18. Verfahren nach Anspruch 17, umfassend:
- das Vergleichen der Fluidmenge mit einem vorbestimmten Wert für die Fluidmenge, und
- das Generieren eines ersten oder zweiten Steuersignals in Abhängigkeit von dem Ergebnis des Vergleichs.

19. Verfahren nach Anspruch 18, umfassend:
- das Vergleichen der Fluidmenge in dem Haupttank mit einem niedrigsten Grenzwert für die Fluidmenge in dem Haupttank, und
- das Generieren eines ersten Steuersignals, falls die Fluidmenge in dem Haupttank unter dem niedrigsten Grenzwert liegt.

20. Verfahren nach Anspruch 17 oder 18, umfassend:
- das Vergleichen der Fluidmenge in dem Nebentank mit einem niedrigsten Grenzwert für die Fluidmenge in dem Nebentank, und
- das Generieren eines zweiten Steuersignals, falls die Fluidmenge in dem Nebentank unter dem niedrigsten Grenzwert liegt.

21. Verfahren nach einem der Ansprüche 13 bis 20, umfassend das Versetzen des Systems in den zweiten Zustand während eines vorbestimmten Zeitraums.

22. Computerprogramm (P), wobei das Computerprogramm (P) Programmcode umfasst, um zu bewirken, dass eine elektronische Steuereinheit (19) oder ein anderer Computer, der an die elektronische Steuereinheit angeschlossen ist, die Schritte nach einem der Ansprüche 13 bis 21 ausführt.

23. Computerprodukt, umfassend Programmcode, der auf einem nicht vorübergehenden Medium gespeichert ist, das durch einen Computer gelesen werden kann, um die Verfahrensschritte nach einem der Ansprüche 13 bis 21 auszuführen, wenn der Programmcode auf einer elektronischen Steuereinheit (19) oder einem anderen Computer, der an die elektronische Steuereinheit angeschlossen ist, abläuft.

## Revendications

1. Système (100) de transfert de fluide dans un véhicule (1), le système comprenant :
- un réservoir principal (4),
- un réservoir secondaire (5),
- une pompe (6),
- un premier système de soupapes (11),
- une première conduite de fluide (13) qui relie une source d'air sous pression au système de soupapes (11),
- une deuxième conduite de fluide (15) qui relie le système de soupapes (11) au réservoir secondaire (5),
- une troisième conduite de fluide (17) qui relie le système de soupapes (11) au réservoir principal (4), la pompe (6) étant disposée au moins partiellement dans les première (13) et troisième (17) conduites de fluide ;
le système (100), en réaction à un signal de commande, étant conçu pour être placé dans
un premier état, dans lequel le premier système de soupapes (11) est dans un premier état dans lequel de l'air sous pression circule à travers la première conduite de fluide (13) de la source d'air sous pression à la pompe (6), la pompe transférant le fluide du réservoir secondaire (5) au réservoir principal (4) à travers le système de soupapes (11) et à travers les deuxième (15) et troisième (17) conduites de fluide, ou
un deuxième état, dans lequel le premier système de soupapes (11) est dans un deuxième état dans lequel de l'air sous pression circule à travers les première (13) et deuxième (15) conduites de fluide de la source d'air sous pression au réservoir secondaire (5) à travers le système de soupapes (11), la pompe (6) transférant un flux d'air dans la troisième conduite de fluide (17) du système de soupapes (11) au réservoir principal (4).

2. Système (100) selon la revendication 1, comprenant un deuxième système de soupapes conçu pour réguler l'alimentation en air sous pression et pour être placé dans un état fermé dans lequel l'air sous pression ne peut pas circuler dans la première conduite de fluide (13) et un état ouvert dans lequel de l'air sous pression circule dans la première canalisation de fluide (13).

3. Système (100) selon la revendication 2, dans lequel le deuxième système de soupapes est conçu pour être placé dans l'état ouvert lorsque le système est dans le premier ou le deuxième état.

4. Système (100) selon l'une quelconque des revendications précédentes, dans lequel le premier système de soupapes est une soupape à cinq orifices, de préférence une soupape 5/2 ou 5/3.

5. Système (100) selon l'une quelconque des revendications précédentes, dans lequel le fluide qui est transféré est un agent réducteur.

6. Système (100) selon l'une quelconque des revendications précédentes, comprenant une unité de commande (19) conçue pour générer un premier signal de commande pour placer le système dans le premier état et un deuxième signal de commande pour placer le système dans le deuxième état.

7. Système (100) selon la revendication 6, dans lequel le réservoir principal (4) et/ou le réservoir secondaire (5) est/sont équipé(s) d'au moins un capteur (21) qui mesure la quantité de fluide dans le réservoir (4, 5), et qui est conçu pour générer un signal du capteur qui précise la quantité de fluide, l'unité de commande (19) étant conçue pour recevoir le signal du capteur et pour générer un premier ou un deuxième signal de commande en fonction de la quantité de fluide dans le réservoir principal (4) et/ou le réservoir secondaire (5).

8. Système (100) selon la revendication 7, dans lequel l'unité de commande (19) est conçue pour comparer la quantité de fluide à une valeur préétablie pour la quantité de fluide, et pour générer un premier ou un deuxième signal de commande en fonction du résultat de la comparaison.

9. Système (100) selon la revendication 8, **caractérisé en ce que** l'unité de commande (19) est configurée pour comparer la quantité de fluide dans le réservoir principal (4) à une valeur de limitation la plus basse pour la quantité de fluide dans le réservoir principal (4), et pour générer un premier signal de commande si la quantité de fluide dans le réservoir principal (4) est inférieure à la valeur de limitation la plus basse.

10. Système (100) selon la revendication 8 ou 9, dans lequel l'unité de commande (19) est configurée pour comparer la quantité de fluide dans le réservoir secondaire (5) à une valeur de limitation la plus basse pour la quantité de fluide dans le réservoir secondaire (5), et pour générer un deuxième signal de commande si la quantité de fluide dans le réservoir principal (4) est inférieure à la valeur de limitation la plus basse.

11. Système (100) selon l'une quelconque des revendications 6 à 10, **caractérisé en ce que** l'unité de commande (19) est conçue pour placer le système dans le deuxième état pendant un laps de temps prédéterminé.

12. Véhicule (1) comprenant le système (100) selon l'une quelconque des revendications qui précèdent.

13. Procédé de transfert de fluide dans un système conçu pour un véhicule (1), le système (100) comprenant :
- un réservoir principal (4),
- un réservoir secondaire (5),
- une pompe (6),
- un premier système de soupapes (11),
- une première conduite de fluide (13) qui relie une source d'air sous pression au système de soupapes,
- une deuxième conduite de fluide (15) qui relie le système de soupapes au réservoir secondaire,
- une troisième conduite de fluide (17) qui relie le système de soupapes au réservoir principal, la pompe étant disposée au moins partiellement dans les première et troisième conduites de fluide ;
**caractérisé en ce que** le procédé comprend
- la réception (50) d'un signal de commande
- en réaction au signal de commande, le placement du système (60)
dans un premier état (70), dans lequel le premier système de soupapes est placé dans un premier état dans lequel de l'air sous pression circule à travers la première conduite de fluide de la source d'air sous pression à la pompe, et dans lequel le fluide est transféré du réservoir secondaire au réservoir principal à travers le système de soupape et à travers les deuxième et troisième conduites de fluide,
ou
dans un deuxième état (80), dans lequel le premier système de soupapes est dans un deuxième état dans lequel de l'air sous pression circule à travers les première et deuxième conduites de fluide de la source d'air sous pression au réservoir secondaire, et un courant d'air est transféré dans la troisième conduite de fluide du système de soupapes au réservoir principal.

14. Procédé selon la revendication 13, qui comprend la régulation de l'alimentation en air sous pression de la première conduite de fluide.

15. Procédé selon la revendication 14, qui consiste à permettre l'alimentation en air sous pression de la première conduite de fluide lorsque le système est dans le premier ou deuxième état.

16. Procédé selon l'une quelconque des revendications 13 à 15, qui comprend la génération d'un premier signal de commande pour placer le système dans le premier état ou d'un deuxième signal de commande pour placer le système dans le deuxième état.

17. Procédé selon la revendication 16, qui comprend :
- la mesure de la quantité de fluide dans le réservoir,
- la génération d'un premier ou deuxième signal de commande en fonction de la quantité de fluide dans le réservoir principal et/ou le réservoir secondaire.

18. Procédé selon la revendication 17, qui comprend :
- la comparaison de la quantité de fluide à une valeur prédéterminée pour la quantité de fluide, et
- la génération d'un premier ou deuxième signal de commande en fonction des résultats de la comparaison.

19. Procédé selon la revendication 18, qui comprend :
- la comparaison de la quantité de fluide dans le réservoir principal à une valeur de limitation la plus basse pour la quantité de fluide dans le réservoir principal, et
- la génération d'un premier signal de commande si la quantité de fluide du réservoir principal est inférieure à la valeur de limitation la plus basse.

20. Procédé selon la revendication 17 ou 18, qui comprend :
- la comparaison de la quantité de fluide dans le réservoir secondaire à la valeur de limitation la plus basse pour la quantité de fluide dans le réservoir secondaire, et
- la génération d'un deuxième signal de commande si la quantité de fluide du réservoir secondaire est inférieure à la valeur de limitation la plus basse.

21. Procédé selon l'une quelconque des revendications 13 à 20, qui comprend le placement du système dans le deuxième état pendant un laps de temps prédéterminé.

22. Programme informatique (P), ledit programme informatique (P) comprenant un code de programme destiné à amener une unité de commande électronique (19) ou un autre ordinateur connecté à l'unité de commande électronique à réaliser les étapes selon l'une quelconque des revendications 13 à 21.

23. Produit informatique comprenant un code de programme stocké sur un support non transitoire lisible par ordinateur afin de réaliser les étapes de procédé selon l'une quelconque des revendications 13 à 21, lorsque ledit code de programme est exécuté sur une unité de commande électronique (19) ou un autre ordinateur connecté à l'unité de commande électronique.
